# EUROPÄISCHE PATENTSCHRIFT

(11) **EP 1 066 180 B1**
(45) Veröffentlichungstag und Bekanntmachung des Hinweises auf die Patenterteilung: **23.03.2005**
(21) Anmeldenummer: 00904856.2
(22) Anmeldetag: 29.01.2000
(51) Int. Cl.: B60S 1/08, B60S 1/48

(54) **SCHEIBENWISCHER-ANTRIEBSAGGREGAT UND DAMIT AUSGESTATTETES FAHRZEUG**
WINDSCREEN WIPER DRIVE AGGREGATE AND A VEHICLE WHICH IS EQUIPPED WITH THE SAME
MECANISME D'ENTRAINEMENT D'ESSUIE-GLACE ET VEHICULE EQUIPE DE CE DERNIER

(30) Priorität: 02.02.1999 DE 29901649 U
(43) Veröffentlichungstag der Anmeldung: 10.01.2001
(73) Patentinhaber: ROBERT BOSCH GMBH, 70442 Stuttgart (DE)
(72) Erfinder: MICHENFELDER, Gebhard, D-77839 Lichtenau (DE); WEBER, Marcellus, D-77886 Lauf (DE); BRAUN, Peter, D-77830 Buehlertal (DE); MAY, Michael, D-77654 Offenburg (DE); ECKERT, Klaus, D-77770 Durbach Ebersweier (DE)
(86) Internationale Anmeldenummer: PCT/DE2000/000255
(87) Internationale Veröffentlichungsnummer: WO 2000/046083

(56) Entgegenhaltungen:
- WO-A-98/26965
- DE-A- 4 431 152
- GB-A- 2 096 800
- US-A- 4 857 812

## Beschreibung

Die vorliegende Erfindung betrifft ein Scheibenwischer-Antriebsaggregat gemäß dem Oberbegriff des Anspruchs 1 und ein damit ausgestattetes Fahrzeug gemäß dem Oberbegriff der Ansprüche 6 und 7.

Aus der US-A-4 857 812 ist ein Scheibenwischer-Antriebsaggregat dieser Art bekannt, bei dem die Sensoren als Endlagenschalter ausgebildet sind und geschlossen werden, wenn sich der Scheibenwischer in seiner Parkposition befindet, um den Antriebsmotor immer in dieser Position abzustellen. Mit einem derartigen Endlagenschalter kann jedoch nur die Parkposition des Wischers detektiert und zur Auslösung einer Steueroperation ausgenutzt werden, nicht jedoch eine andere Position, wie die entgegengesetzte Umkehrposition oder beliebige weitere Positionen zwischen der Park- und der Umkehrposition. Ohne eine solche Positionserfassung ist es jedoch nicht möglich, in beliebigen Winkelpositionen des Scheibenwischers Schaltoperationen der Steuerschaltung auszulösen.

Aus der DE-A-44 31 152 ist weiter eine Baugruppe für den Antrieb und die Steuerung eines Scheibenwischers bekannt, die einen als Mikroschalter ausgebildeten und mit der Steuerschaltung und dem Gehäuse des Antriebsmotors zu einer Einheit zusammengefassten Endlagenschalter umfasst. Der Endlagenschalter kann als Reed-Schalter oder kontaktloser Schalter ausgebildet sein, der an Stelle des Laststroms des Antriebsmotors den Steuerstrom der Steuerschaltung schaltet, jedoch ebenfalls keine Erfassung der augenblicklichen Winkelstellung der Welle bzw. des Scheibenwischers ermöglicht.

Weiter offenbart die GB-A-2 096 800 eine automatische Steuerung für einen Scheibenwischerantrieb, die ebenfalls eine Schaltervorrichtung zum Anhalten des Scheibenwischers am Ende seines Bewegungswegs umfasst.

Die WO 98/26965 offenbart eine Einrichtung zum Erwärmen einer Sprühdüse einer Scheibenwaschanlage eines Fahrzeugs, die entweder zusammen mit einer Pumpe für Scheibenwaschflüssigkeit oder durch Starten des Fahrzeugs aktiviert wird.

Ausgehend hiervon liegt der Erfindung die Aufgabe zugrunde, ein Scheibenwischer-Antriebsaggregat der eingangs genannten Art dahingehend zu verbessern, dass der Sensor in beliebigen Stellungen des Scheibenwischers Schaltoperationen der Steuerschaltung auslösen kann.

Diese Aufgabe wird erfindungsgemäß durch die Merkmale des Anspruchs 1 gelöst.

Die Steuerschaltung ist dabei zuständig für alle relevanten Funktionen des Scheibenwischers, zum Beispiel Wischen mit unterschiedlichen Geschwindigkeiten, Intervallwischen mit verschiedenen Intervallpausen, Ansteuerung einer Pumpe für eine Scheibewaschflüssigkeit etc. Der wenigstens eine Sensor dient zur Gewinnung der für die Steuerung der Bewegungsfolge des Wischers benötigten Informationen über die aktuelle Stellung des Wischers, das heißt ob der Wischer sich über eine Stellung hinweg bewegt, an der eine Schaltoperation der Steuerschaltung erforderlich ist, ob der Wischer sich mit der geforderten Geschwindigkeit bewegt oder ob er, zum Beispiel infolge von Überlastung durch auf der Scheibe liegendem Schnee, steckengeblieben ist.

Je vielfältiger und komplexer die möglichen Betriebszustände des Wischers sind, umso mehr Sensoren sind im allgemeinen zu ihrer Steuerung erforderlich, beziehungsweise umso mehr Informationen müssen zwischen Sensoren, Steuerschaltung und Motor ausgetauscht werden.

Durch die vorliegende Erfindung wird ein Scheibenwischer-Antriebsaggregat geschaffen, das neben der Auslösung von Schaltoperationen der Steuerschaltung in beliebigen Winkelstellungen des Scheibenwischers auch eine einfache, wenig störanfällig Signalübertragung zwischen Sensor(en), Steuerschaltung und Antriebsmotor ermöglicht. Indem nämlich diese drei Komponenten zu einer einheitlichen Baugruppe zusammengefaßt werden, werden die Signalwege zwischen ihnen erheblich verkürzt, und die Einkopplung von externen Störungen in die Signalleitungen ist erheblich vermindert. Die einheitliche Baugruppe kann ohne Schwierigkeiten als Ganzes, zum Beispiel durch ein kompaktes Metallgehäuse, gegen externe Störungen abgeschirmt werden.

Sie empfängt von außen neben den erforderlichen Versorgungsspannungen lediglich Bediensignale, mit denen ein Fahrer des Fahrzeugs einen gewünschten Betriebszustand des Scheibenwischers spezifiziert. Diese Bediensignale ändern sich im Vergleich zu den Erfassungssignalen des Sensors beziehungsweise der Sensoren äußerst selten, und ihre Übertragung ist dementsprechend wenig störanfällig.

Weitere Merkmale und Vorteile der Erfindung ergeben sich aus der nachfolgenden Beschreibung eines Ausführungsbeispiels.

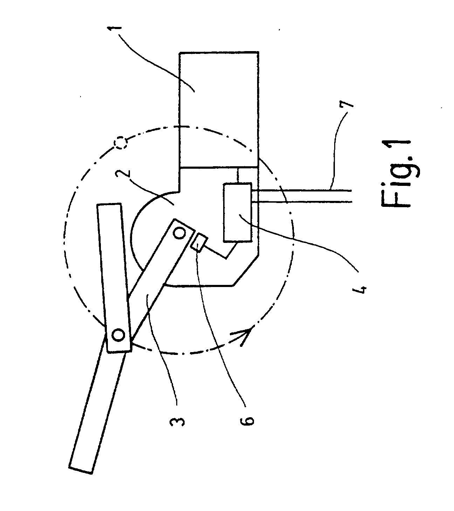

Figuren
- Figur 1: zeigt stark schematisiert ein Scheibenwischer-Antriebsaggregat gemäß der Erfindung; und
- Figur 2: zeigt zum Vergleich ein herkömmliches Scheibenwischer-Antriebsaggregat.

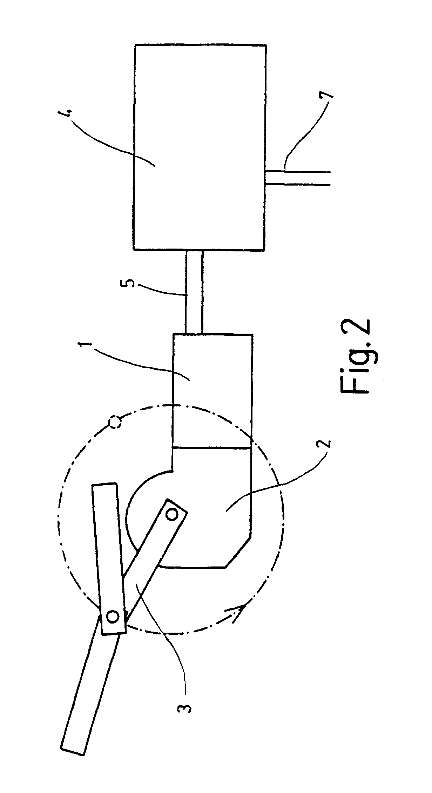

Das in Figur 2 gezeigte herkömmliche Antriebsaggregat umfaßt einen Motor 1, der mit einem Untersetzungsgetriebe 2 zu einer Einheit zusammengefaßt ist. An einer Abtriebswelle des Untersetzungsgetriebes 2 kann ein Arm 3 eines Pendelgetriebes montiert sein, das eine gleichsinnige Drehbewegung in eine hin- und herschwingende Drehbewegung eines Scheibenwischers umsetzt, die hin- und her schwingende Drehbewegung kann aber auch direkt durch den Motor erzeugt werden. Eine externe zentrale Steuerschaltung 4 ist über einen Kabelstrang 5 mit der durch Motor 1 und Untersetzungsgetriebe 2 gebildeten Baueinheit verbunden, empfängt über diese Signale von Sensoren, die in der Baueinheit an geeigneter Stelle montiert sind, um den Bewegungszustand des Scheibenwischers zu überwachen, verarbeitet diese in Verbindung mit Bediensignalen, die über Anschlüsse 7 von Bedienelementen in der Fahrgastzelle des Fahrzeugs empfangen werden und liefert über den Kabelstrang 6 einen Betriebsstrom an den Motor 1, der diesen mit einer gewünschten Geschwindigkeit in eine gegebene Richtung rotieren läßt.

Bei dem erfindungsgemäßen Scheibenwischer-Antriebsaggregat ist eine Steuerschaltung 4 zusammen mit Motor 1 und Untersetzungsgetriebe 2 in einem gemeinsamen abgeschirmten Gehäuse untergebracht und bildet eine einheitliche Baugruppe mit diesen. Sensoren wie der an der Welle des Arms 3 eines Pendelgetriebes dargestellte Winkelsensor 6 haben eine geringe Entfernung von allenfalls wenigen Zentimetern von der Steuerschaltung 4 und aufgrund der kurzen Laufstrecke des Erfassungssignals des Sensors 6 zur Schaltung 4 ist dieses wenig externen Störeinflüssen ausgesetzt. Es ist sogar möglich, den Sensor 6 zusammen mit der Steuerschaltung 4 auf einem gemeinsamen Substrat auszubilden, so daß auf die Montage von Kabeln zur Signalübertragung zwischen Sensor und Steuerschaltung völlig verzichtet werden kann.

Das Ausgangssignal des Sensors 6 wird ausschließlich von der Steuerschaltung 4 ausgewertet. Es ist deshalb kein Anschluß vorgesehen, an dem dieses Signal aus der Baugruppe herausgeführt wird. Somit ist auch die Einkopplung von Störungen über Außenanschlüsse ausgeschlossen.

Die Steuerschaltung 4 enthält eine Leistungsendstufe, die einen Antriebsstrom für den Motor 1 liefert. Nach außen führende Anschlüsse 7 sind sämtlich an die Steuerschaltung 4 angeschlossen und dienen der Stromversorgung der Steuerschaltung sowie der daran angeschlossenen Sensoren und des Motors sowie der Versorgung der Steuerschaltung mit Bediensignalen, die ein Fahrer des Fahrzeugs durch Schalten von Bedienhebeln liefert, und die zum Beispiel die gewünschte Wischgeschwindigkeit der Scheibenwischer, Intervallwischen und gegebenenfalls die Länge der Pausenintervalle etc. spezifizieren.

Zu diesem Zweck können einzelne der Anschlüsse 7 direkt mit von den Bedienhebeln betätigten Schaltern verbunden sein, so daß die Steuerschaltung 4 direkt den Schaltzustand ein oder aus dieser Schalter erfaßt. Alternativ dazu können die Bediensignale in kodierter Form auf einem Bus an die Anschlüsse 7 übertragen werden, was insbesondere bei einem komplexen Antriebsaggregat zweckmäßig ist, dessen Steuerschaltung in der Lage ist, eine Vielzahl von verschiedenen Funktionen auszuführen.

Gemäß einer vorteilhaften Weiterentwicklung ist die Steuerschaltung 4 in der Lage, eine Pumpe ein- und auszuschalten, die zum Besprühen der Scheibe des Fahrzeugs mit einer Waschflüssigkeit dient. Diese Steuerung kann zum Beispiel so erfolgen, daß die Pumpe die Scheibe intervallweise besprüht, und zwar immer kurz bevor der Scheibenwischer den Auftreffbereich des Sprühstrahls auf der Scheibe erreicht. So wird vermieden, daß Waschflüssigkeit ungenutzt abfließt, und die Effektivität des Waschvorgangs wird verbessert.

Die Steuerschaltung kann auch zur Steuerung der Reinigung der Scheinwerfer des Fahrzeugs sowie der Heizung von Sprühdüsen für die Reinigungsflüssigkeit und gegebenenfalls einer Zufuhrleitung der Reinigungsflüssigkeit von einem Vorratsbehälter zu den Düsen genutzt werden.

Aufgrund der geringen Anfälligkeit gegen externe Störeinflüsse erlaubt die Erfindung die Verwendung von preiswerten Standardkomponenten in der Steuerschaltung. So kann zur Auswertung der Erfassungssignale des Sensors (der Sensoren) und der Bediensignale und zur Ansteuerung der Leistungsendstufe eine taktgesteuerte Schaltung wie etwa ein Mikroprozessor oder Mikrocontroller eingesetzt werden. Einsparungen ergeben sich ferner durch den Fortfall von Signalleitungen. Aufgrund der verbesserten Sicherheit der Übertragung einer Positionserfassungsinformation vom Sensor zur Steuerschaltung ist es ferner möglich, auf einen Kurzschlußschutz in der Motorendstufe der Steuerschaltung zu verzichten.

Die Erfindung ist sowohl für Motoren mit fester Drehrichtung als auch für reversierende Motoren anwendbar.

## Patentansprüche

1. Scheibenwischer-Antriebsaggregat mit einem Antriebsmotor (1) und einem Getriebe (2, 3) zum Übertragen einer Drehbewegung des Motors (1) auf die Welle eines Scheibenwischers, wenigstens einem Sensor (6) zum Erfassen einer Stellung der Welle, sowie einer Steuerschaltung (4), die ein Erfassungssignal des Sensors (6) empfängt und einen Eingang oder mehrere Eingänge (7) zum Empfangen von einen gewünschten Betriebszustand des Scheibenwischers definierenden Bediensignalen aufweist und eingerichtet ist, eine Folge von Bewegungen der Welle in Abhängigkeit vom empfangenen Bediensignal zu steuern, wobei die Steuerschaltung (4) mit dem Antriebsmotor (1) und dem wenigstens einen Sensor (6) zu einer einheitlichen Baugruppe zusammengefasst ist, **dadurch gekennzeichnet, dass** der wenigstens eine Sensor (6) ein Winkelsensor ist, der die aktuelle Stellung der Welle bzw. des Scheibenwischers erfasst.

2. Scheibenwischer-Antriebsaggregat nach Anspruch 1, **dadurch gekennzeichnet, dass** die Steuerschaltung taktgesteuert arbeitet.

3. Scheibenwischer-Antriebsaggregat nach einem der vorhergehenden Ansprüche, **dadurch gekennzeichnet, daß** das Erfassungssignal des Sensors (6) nicht aus dem Scheibenwischer-Antriebsaggregat herausgeführt ist.

4. Scheibenwischer-Antriebsaggregat nach einem der vorhergehenden Ansprüche, **dadurch gekennzeichnet, daß** die Steuerschaltung (4) einen Steuerausgang zum Steuern der Funktion einer Scheibenspülflüssigkeitsquelle in Abhängigkeit von der Stellung der Welle aufweist.

5. Scheibenwischer-Antriebsaggregat nach einem der vorhergehenden Ansprüche, **dadurch gekennzeichnet, daß** die Steuerschaltung (4) einen Steuerausgang zum Steuern der Funktion einer Heizung von Sprühdüsen und einer Zufuhrleitung von einem Vorratsbehälter für eine Reinigungsflüssigkeit zu den Sprühdüsen aufweist.

6. Fahrzeug mit einem Scheibenwischer-Antriebsaggregat nach einem der vorhergehenden Ansprüche, **dadurch gekennzeichnet, daß** der Eingang oder die mehreren Eingänge (7) durch eine Schnittstelle zu einem Bussystem des Fahrzeugs gebildet ist sind.

7. Fahrzeug mit einem Scheibenwischer-Antriebsaggregat nach einem der Ansprüche 1 bis 5, **dadurch gekennzeichnet, daß** der Eingang oder die mehreren Eingänge (7) direkt mit Bedienschaltern in der Fahrgastzelle des Fahrzeugs verbunden ist sind.

## Claims

1. Windscreen wiper drive unit having a drive motor (1) and a mechanism (2, 3) for transmitting a rotational movement of the motor (1) to the shaft of a windscreen wiper, at least one sensor (6) for detecting a position of the shaft, and a control circuit (4) which receives a detection signal from the sensor (6) and has one input or a plurality of inputs (7) for receiving operating signals defining a desired operating state of the windscreen wiper, and is set up to control a sequence of movements of the shaft as a function of the received operating signal, the control circuit (4) with the drive motor (1) and the at least one sensor (6) being combined to form a uniform subassembly, **characterized in that** the at least one sensor (6) is an angled sensor which detects the current position of the shaft or of the windscreen wiper.

2. Windscreen wiper drive unit according to Claim 1, **characterized in that** the control circuit operates under lock control.

3. Windscreen wiper drive unit according to one of the preceding claims, **characterized in that** the detection signal from the sensor (6) is not passed out of the windscreen wiper drive unit.

4. Windscreen wiper drive unit according to one of the preceding claims, **characterized in that** the control circuit (4) has a control output for controlling the operation of a source of rinsing liquid for the windscreen as a function of the position of the shaft.

5. Windscreen wiper drive unit according to one of the preceding claims, **characterized in that** the control circuit (4) has a control output for controlling the operation of a system for heating spray nozzles and of a supply line from a storage container for a cleaning liquid to the spray nozzles.

6. Vehicle having a windscreen wiper drive unit according to one of the preceding claims, **characterized in that** the input or the plurality of inputs (7) is/are formed by an interface to form a bus system of the vehicle.

7. Vehicle having a windscreen wiper drive unit according to one of Claims 1 to 5, **characterized in that** the input or the plurality of inputs (7) is/are connected directly to operating switches in the passenger cell of the vehicle.

## Revendications

1. Dispositif d'entraînement d'essuie-glace comprenant un moteur d'entraînement (1) et un mécanisme (2, 3) destiné à transmettre un mouvement de rotation du moteur (1) à l'arbre d'un essuie-glace, au moins un capteur (6) destiné à détecter une position de l'arbre, ainsi qu'un circuit de commande (4) qui reçoit un signal de détection du capteur (6) et qui, avec une ou plusieurs entrées (7) pour recevoir des signaux de service définissant un état de fonctionnement souhaité de l'essuie-glace, est agencé pour commander une suite de mouvements de l'arbre en fonction du signal de service reçu, le circuit de commande (4) étant regroupé avec le moteur d'entraînement (1) et l'au moins un capteur (6) en un sous-ensemble unitaire,
**caractérisé en ce que**
l'au moins un capteur (6) est un capteur d'angle qui détecte la position actuelle de l'arbre ou de l'essuie-glace.

2. Dispositif d'entraînement d'essuie-glace selon la revendication 1,
**caractérisé en ce que**
le circuit de commande (4) travaille sous commande cyclique.

3. Dispositif d'entraînement d'essuie-glace selon une des revendications précédentes,
**caractérisé en ce que**
le signal de détection du capteur (6) ne sort pas du dispositif d'entraînement d'essuie-glace.

4. Dispositif d'entraînement d'essuie-glace selon une des revendications précédentes,
**caractérisé en ce que**
le circuit de commande (4) présente une sortie de commande pour commander le fonctionnement d'une source de liquide de lave-glace en fonction de la position de l'arbre.

5. Dispositif d'entraînement d'essuie-glace selon une des revendications précédentes,
**caractérisé en ce que**
le circuit de commande (4) présente une sortie de commande pour commander le fonctionnement d'un chauffage de buses de pulvérisation et une conduite d'amenée allant d'un réservoir pour un liquide de nettoyage aux buses de pulvérisation.

6. Véhicule équipé d'un dispositif d'entraînement d'essuie-glace selon une des revendications précédentes,
**caractérisé en ce que**
l'entrée ou les plusieurs entrées (7) est ou sont formée(s) par une interface connectée à un système de bus du véhicule.

7. Véhicule équipé d'un dispositif d'entraînement d'essuie-glace selon une des revendications 1 à 5,
**caractérisé en ce que**
l'entrée ou les plusieurs entrées (7) est ou sont connectée(s) directement à des commutateurs de service situés dans l'habitacle du véhicule.
